Europäisches Patentamt

European Patent Office

Office européen des brevets

(11) Veröffentlichungsnummer: **0 402 602**
**A1**

## EUROPÄISCHE PATENTANMELDUNG

(21) Anmeldenummer: **90108363.4**

(22) Anmeldetag: **03.05.90**

(51) Int. Cl.⁵: **B60N 2/46**

(30) Priorität: **10.06.89 DE 3919000**

(43) Veröffentlichungstag der Anmeldung:
**19.12.90 Patentblatt 90/51**

(84) Benannte Vertragsstaaten:
**DE ES FR IT**

(71) Anmelder: **Gebr. Happich GmbH**
**Postfach 10 02 49 Clausenbrücke 1**
**D-5600 Wuppertal 1(DE)**

Anmelder: **KICK DESIGN BV.**
**Wethouder den Oudenstraat 6**
**NL-5706 ST Helmond(NL)**

(72) Erfinder: **Smits, Henk**
**Molbard 15**
**Hellevoetssluis(NL)**
Erfinder: **Binder, Martin Johannes**
**Van Coothstraat 15**
**CT Boxtel(NL)**

(54) **Armstütze.**

(57) Es wird eine Armstütze zur Montage an einer Seitenwand, insbesondere an einer Tür eines Kraftfahrzeuges beschrieben, die gekennzeichnet ist, durch eine Befestigungsplatte (1), an der eine Armauflageplatte (2) und eine Abstützplatte (3) derart angelenkt sind, daß die genannten Teile in der Nichtgebrauchslage der Armauflageplatte (2) flach aufeinander zu liegen kommen, während sie in der Gebrauchslage der Armauflageplatte (2) ein - in Seitenansicht gesehen - rechtwinkliges Dreieck bilden. Dadurch kann die Armstütze aus einer vollfunktionsfähigen Gebrauchslage in eine platzsparende Nichtgebrauchslage und umgekehrt überführt werden.

Fig. 3

Fig. 4

## Armstütze

Die Erfindung bezieht sich auf eine Armstütze zur Montage an einer Seitenwand, insbesonder an einer Tür eines Kraftfahrzeuges.

An den Türen von Kraftfahrzeugen sind oftmals Armlehnen oder Armstützen angeordnet, die beim Fahren der Bequemlichkeit der Fahrzeuginsassen dienen sollen. Während Fahrzeuge der mittleren und insbesondere der gehobenen Ausstattungsklasse in der Regel serienmäßig mit solchen Armlehnen oder Armstützen ausgerüstet sind, findet man solche bei Fahrzeugen der unteren Preisklasse seltener. Auch bei Kleinwagen wird häufig, auch wegen der hier herrschenden räumlichen Enge, auf den serienmäßigen Einbau von Armlehnen oder Armstützen verzichtet.

Der vorliegenden Erfindung liegt nun die Aufgabe zugrunde, eine Armstütze der eingangs genannten Art so zu gestalten, daß sie bei einfacher und kostengünstiger Herstellbarkeit nicht nur schnell und problemlos an Fahrzeugen nachrüstbar ist sondern darüber hinaus einen nur geringen Platzbedarf beansprucht, so daß sie auch in Fahrzeugen mit engen räumlichen Verhältnissen serienmäßig und/oder nachträglich eingebaut werden kann.

Zur Lösung dieser Aufgabe sieht die Erfindung eine Armstütze zur Montage an einer Seitenwand, insbesondere an einer Tür eines Kraftfahrzeuges vor, die gekennzeichnet ist durch eine Befestigungsplatte, an der eine Armauflageplatte und eine Abstützplatte derart angelenkt sind, daß die genannten Teile in der Nichtgebrauchslage der Armauflageplatte flach aufeinander zu liegen kommen, während sie in der Gebrauchslage der Armauflageplatte ein - in Seitenansicht gesehen - rechtwinkliges Dreieck bilden.

Durch diese erfindungsgemäßen Maßnahmen, ist eine Armstütze geschaffen, die bei Nichtgebrauch zu einem flachen, eng an einer Seitenwand oder an einer Tür anliegenden Paket zusammengeklappt werden kann und die durch bloßes Auseinanderklappen schnell und einfach in die Gebrauchslage überführt werden kann, in der sie sich durch eine hohe Auflagefestigkeit auszeichnet.

Die Befestigungsplatte kann in Weiterbildung der Erfindung eine rechteckige Grundform aufweisen, wobei an der einen Längskante die Armauflageplatte und an der anderen Längskante die Abstützplatte angelenkt ist. Dabei ist weiterhin gemäß einer bevorzugten Ausführungsform der Erfindung vorgesehen, daß die Armstütze aus einem einstückig ausgebildeten Kunststoff-Spritzgußteil besteht, wobei die Armauflageplatte und die Abstützplatte mittels Filmscharnieren an der Befestigungsplatte angelenkt sind. Eine solche Ausgestaltung der Erfindung trägt der Forderung nach einer preisgünstigen Herstellbarkeit Rechnung und läßt auch, neben einer beliebigen Farbgestaltung, ansprechende Oberflächenstrukturen, z.B. Narbungen (Lederimitationen) zu.

Eine weitere Ausgestaltung der Erfindung sieht vor, daß die Befestigungsplatte, die Abstützplatte und die Armauflageplatte jeweils schalenförmig ausgebildet und in Form und Größe so aufeinander abgestimmt sind, daß in der zusammengeklappten Nichtgebrauchslage der Armstütze die Armauflage die Befestigungsplatte und die Abstützplatte die Armauflageplatte übergreift. Durch die hierdurch ermöglichte Ineinanderschachtelung der Armstützenelemente, ergibt sich eine besonders flache, nur gering auftragende Bauform.

Schließlich ist es noch von Vorteil, wenn Klipselemente zwischen der Armauflageplatte einerseits und der Abstützplatte andererseits zur lösbaren Arretierung der Armauflageplatte sowohl in der Gebrauchslage als auch in der Nichtgebrauchslage vorgesehen sind.

Die neue Armstütze ist aufgrund ihrer Preisgünstigkeit und schnellen sowie einfachen. Montierbarkeit auch zur Ergänzung vorhandener Armlehnen od. dgl. geeignet, insbesondere dann, wenn die serienmäßig vorgesehenen Positionen eingebauter Armlehnen, die oftmals zu tief liegen, den Wünschen und Anforderungen der Fahrzeugbenutzer nicht entsprechen.

Im folgenden wird ein Ausführungsbeispiel der Erfindung anhand der Zeichnung näher erläutert. Es zeigen:

Fig. 1 die Armstütze im völlig aufgeklappten Zustand,

Fig. 2 eine Seitenansicht der Fig. 1,

Fig. 3 die Armstütze in ihrer aufgeklappten Gebrauchslage und

Fig. 4 die Armstütze in ihrer zusammengeklappten Nichtgebrauchslage.

Die neue Armstütze ist als einstückiges, materialeinheitliches Kunststoff-Spritzgußteil ausgebildet. Die Armstütze umfaßt eine Befestigungsplatte 1, eine Armauflageplatte 2 und eine Abstützplatte 3. Die Befestigungsplatte 1 weist eine rechteckige Grundform auf und trägt an ihrer, auf der Zeichnung oberen Längskante über ein Filmscharnier 4 die Armauflageplatte 2 und an ihrer, auf der Zeichnung unteren Längskante über ein weiteres Filmscharnier 5 die Abstützplatte 3.

Die Befestigungsplatte 1 ist schalenförmig ausgebildet und weist einen umlaufenden Schalenrand 6 sowie zwei einander und von den kurzen Plattenrändern beabstandete Versteifungsrippen 7 auf. Die Versteifungsrippen 7 bilden Lochdurchzüge 8 zur Duchführung von Befestigungselementen zur Befestigung der Armstütze an einer Anschlußfläche, insbesondere Fahrzeugtür. Die Befestigungsplatte 1 weist im unteren Bereich des Schalenrandes ebenso wie die Versteifungsrippen 7, parallel zu den Längskanten verlaufende Aussparungen 9 auf..

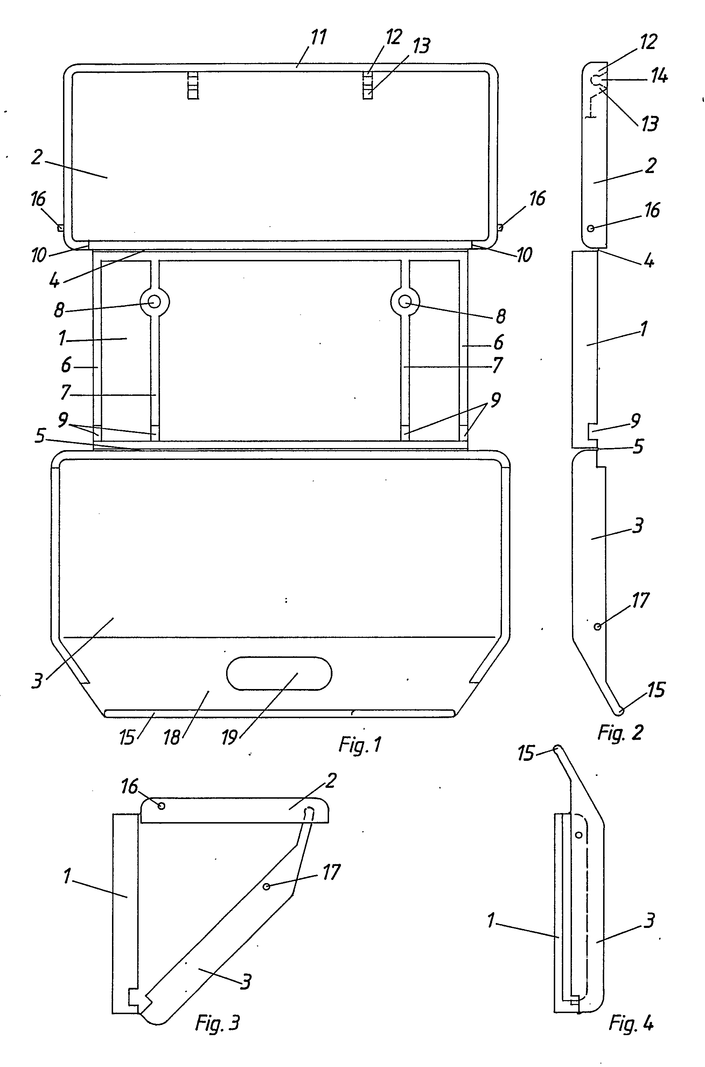

Die Armauflageplatte 2 ist ebenfalls schalenförmig ausgebildet, weist einen umlaufenden, zwischen den Einschnitten 10 niedriger ausgebildeten Schalenrand 11 und eine etwa rechteckige Grundform auf, die aber größer bemessen ist als die der Befestigungsplatte 1. Die Armauflageplatte 2 kann auf die Befestigungsplatte geklappt werden, wobei der Schalenrand 11 in die Aussparungen 9 der Befestigungsplatte 1 eingreift. Die Armauflageplatte 2 weist an ihrem der oberen Randkante benachbarten Bereich angeformte Klipselemente 12, 13 auf, die jeweils ein hinterschnittenes, der lösbaren Arretierung einer wulstförmig ausgebildeten Randkante 15 der Abstützplatte 3 dienendes Fangmaul 14 bilden, wenn die Armstütze die in Fig. 3 gezeigte Gebrauchslage einnimmt. Die Armauflageplatte 2 weist an ihren Schmalseiten noch nach außen vorstehende Zapfen 16 auf, die in Zapfenlöcher 17 der Abstützplatte 3 eingreifen, wenn die Armstütze die in Fig. 4 gezeigte Nichtgebrauchslage einnimmt.

Die Abstützplatte 3 ist ebenfalls schalenförmig ausgebildet und so gestaltet, daß sie einerseits die Armauflageplatte 2, wie in Fig. 3 gezeigt, abzustützen und andererseits die auf die Befestigungsplatte 1 geklappte Armauflageplatte durch Daraufklappen, wie in Fig. 4 gezeigt, abzudecken vermag.

In der Gebrauchslage der Armstütze (Fig. 3) greift die wulstförmige Randkante 15, die sich an einer schräg gestellten Verlängerung 18 der Abstützplatte 3 befindet, klipsartig in die Fangmäuler 14 an der Armauflageplatte 2 ein, so daß ein starres, klapperfreies System mit hoher Auflagefestigkeit gebildet ist. Zur Überführung der Armstütze aus der Gebrauchslage in die Nichtgebrauchslage wird die Klipsverbindung der Teile 12 bis 15 gegebenenfalls unter Zuhilfenahme der Handhabungsöffnung 19 in der Abstützplatte 3 gelöst, die Armauflageplatte 2 auf die Befestigungsplatte geklappt und sodann die Abstützplatte 3 auf die Armauflageplatte 2 geklappt. Dabei kommt es zum lösbaren Einrasten der Zapfen 16 in die Zapfenlöcher 17 und zur Fixierung der Armstütze in der Nichtgebrauchslage. Die Überführung der Armstütze aus der Nichtgebrauchslage in die Gebrauchslage erfolgt in umgekehrter Reihenfolge.

## Ansprüche

1. Armstütze zur Montage an einer Seitenwand, insbesondere an einer Tür eines Kraftfahrzeuges, gekennzeichnet durch eine Befestigungsplatte (1), an der eine Armauflageplatte (2) und eine Abstützplatte (3) derart angelenkt sind, daß die genannten Teile in der Nichtgebrauchslage der Armauflageplatte (2) flach aufeinander zu liegen kommen, während sie in der Gebrauchslage der Armauflageplatte (2) ein - in Seitenansicht gesehen - rechtwinkliges Dreieck bilden.

2. Armstütze nach Anspruch 1, gekennzeichnet durch eine rechteckige Grundform der Befestigungsplatte (1), an deren einen Längskante die Armauflageplatte (3) und an deren anderen Längskante die Abstützplatte (3) angelenkt ist.

3. Armstütze nach Anspruch 1 oder 2, dadurch gekennzeichnet, daß dieselbe aus einem einstückig ausgebildeten Kunststoff-Spritzguß teil besteht, wobei die Armauflageplatte (2) und die Abstützplatte (3) mittels Filmscharnieren (4, 5) an der Befestigungsplatte (1) angelenkt sind.

4. Armstütze nach einem oder mehreren der Ansprüche 1 bis 3, dadurch gekennzeichnet, daß die Befestigungsplatte (1), die Abstützplatte (3) und die Armauflageplatte (2) jeweils schalenförmig ausgebildet und in Form und Größe so aufeinander abgestimmt sind, daß in der zusammengeklappten Nichtgebrauchslage der Armstütze die Armauflageplatte (2) die Befestigungsplatte (1) und die Abstützplatte (3) die Armauflageplatte (2) übergreift.

5. Armstütze nach einem oder mehreren der Ansprüche 1 bis 4, gekennzeichnet durch Klipselemente (12, 13, 14, 16, 17) zwischen der Armauflageplatte (2) einerseits und der Abstützplatte (3) andererseits zur lösbaren Arretierung der Armauflageplatte (2) sowohl in der Gebrauchslage als auch in der Nichtgebrauchslage.

Fig. 1

Fig. 2

Fig. 3

Fig. 4

| | EUROPÄISCHER RECHERCHENBERICHT | | | Nummer der Anmeldung |
|---|---|---|---|---|

**Europäisches Patentamt**

# EINSCHLÄGIGE DOKUMENTE

EP 90108363.4

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| A | <u>FR - A - 1 518 824</u><br>(SOCIETE INDUSTRIELLE ET COMMERCIALE DES AUTOMOBILES PEUGEOT ET REGIE NATIONALE DES USINES RENAULT)<br>* Gesamt * | 1,2 | B 60 N 2/46 |
| A | <u>EP - A2 - 0 315 322</u><br>(GENERAL MOTORS CORPORATION)<br>* Fig. 3,4 * | 1 | |

|  | RECHERCHIERTE SACHGEBIETE (Int Cl.5) |
|---|---|
| | B 60 N<br>B 60 J<br>A 47 C |

Der vorliegende Recherchenbericht wurde für alle Patentansprüche erstellt.

| Recherchenort | Abschlußdatum der Recherche | Prüfer |
|---|---|---|
| WIEN | 17-09-1990 | SCHMICKL |